# EUROPEAN PATENT APPLICATION

(11) **EP 3 699 752 A1**
(43) Date of publication of application: **26.08.2020**
(21) Application number: 20154828.6
(22) Date of filing: 31.01.2020
(51) Int. Cl.: G06F 7/499, G06F 7/38

(54) **ARITHMETIC PROCESSING DEVICE, INFORMATION PROCESSING APPARATUS, AND ARITHMETIC PROCESSING METHOD**

(30) Priority: 21.02.2019 JP 2019029741
(71) Applicant: FUJITSU LIMITED, Kanagawa 211-8588 (JP)
(72) Inventor: MORIKI, Sosaku, Fukuoka-shi, Fukuoka 814-8588 (JP)
(74) Representative: Haseltine Lake Kempner LLP

(57) **Abstract**

An arithmetic processing device includes: a register that stores therein a plurality of fixed-point number data pieces; an arithmetic circuit that executes computing on the plurality of fixed-point number data pieces according to an arithmetic instruction; an acquiring circuit that compiles statistical information on a distribution of most significant bit positions in the plurality of fixed-point number data pieces stored in the register; and a determination circuit that identifies a most-frequent bit position which is a position having the largest number of most significant bits based on the statistical information, and determines a bit width for fixed-point number data pieces to be used for computing based on the identified most-frequent bit position, wherein the arithmetic circuit executes computing using bits corresponding to the bit width determined by the determination circuit among bits in each fixed-point number data piece output from the register.

## Description

### FIELD

The embodiments discussed herein are related to an arithmetic processing device, an information processing apparatus, and an arithmetic processing method.

### BACKGROUND

For an arithmetic processing device used in deep learning and so on, there has been proposed a method for improving the precision of the deep learning by updating the decimal point position for fixed-point number data pieces based on the distribution of bit positions in the fixed-point number data pieces obtained by execution of an arithmetic instruction.

For normalization of multiple data pieces based on the greatest value, there has been proposed a method for reducing a loss of a data piece having a small value, the method including determining target data pieces and non-target data pieces for the normalization and replacing the non-target data pieces with a boundary value of the normalization range.

Related art is disclosed in Japanese Laid-open Patent Publication No. 2018-124681 and Japanese Laid-open Patent Publication No. 2006-48590.

Inference processing such as image recognition using a neural network may be required to achieve real-time performance. One conceivable method for achieving the real-time performance is, for example, to compress data for use in computing, such as converting 32-bit floating-point number data pieces into 16-bit fixed-point number data pieces, thereby improving the computational efficiency. On the other hand, even when the number of valid digits in data is reduced by the compression of the data, it is desirable to maintain the recognition precision.

In one aspect, embodiments aim to improve the computational efficiency of inference processing by a neural network while maintaining the recognition precision of the inference processing.

### SUMMARY

According to an aspect of the embodiments, an arithmetic processing device includes: a register that stores therein a plurality of fixed-point number data pieces; an arithmetic circuit that executes computing on the plurality of fixed-point number data pieces according to an arithmetic instruction; an acquiring circuit that compiles statistical information on a distribution of most significant bit positions in the plurality of fixed-point number data pieces stored in the register; and a determination circuit that identifies a most-frequent bit position which is a position having the largest number of most significant bits based on the statistical information, and determines a bit width for fixed-point number data pieces to be used for computing based on the identified most-frequent bit position, wherein the arithmetic circuit executes computing using bits corresponding to the bit width determined by the determination circuit among bits in each fixed-point number data piece output from the register.

### BRIEF DESCRIPTION OF DRAWINGS

Embodiments of the invention are set out, by way of example only, with reference to the following drawings, in which:
FIG. 1 is a diagram illustrating an example of an arithmetic processing device in an embodiment;
FIG. 2 is a diagram illustrating an example of an operation in inference processing by the arithmetic processing device in FIG. 1;
FIG. 3 is a flowchart illustrating an example of an operation procedure in the inference processing by the arithmetic processing device illustrated in FIG. 1;
FIG. 4 is a diagram illustrating an example of an arithmetic processing device in another embodiment;
FIG. 5 is a diagram illustrating an example of an information processing apparatus equipped with the arithmetic processing device illustrated in FIG. 4;
FIG. 6 is a diagram illustrating an example of a distribution of the most significant bits in a certain number of fixed-point number data pieces to be used in an inference model of a neural network;
FIG. 7 is a diagram illustrating an example of variations of a distribution of the most significant bits in a certain number of fixed-point number data pieces to be used in the inference model of the neural network;
FIG. 8 is a diagram illustrating an example of a change in recognition precision of the inference processing in the case where the bit width is set based on a bit position shifted by each given number of bits from the most-frequent bit position identified by a quantizer;
FIG. 9 is a diagram illustrating an example of a change in recognition precision with a change in a threshold;
FIG. 10 is a diagram illustrating an example of the distributions of the most significant bits in fixed-point number data pieces before and after a change in the data bit width;
FIG. 11 is a diagram illustrating an example of recognition precision depending on types of data pieces used in the inference processing;
FIG. 12 is a flowchart illustrating an example of an operation procedure in the inference processing by the arithmetic processing device illustrated in FIG. 4;
FIG. 13 is a flowchart illustrating an example of a procedure of compressing a data bit width to be executed by another arithmetic processing device after learning processing by a neural network; and
FIG. 14 is a diagram illustrating an example of an inference model of a neural network designed in accordance with the bit width determined in FIG. 13.

### DESCRIPTION OF EMBODIMENTS

Hereinafter, the embodiments are described using the drawings.

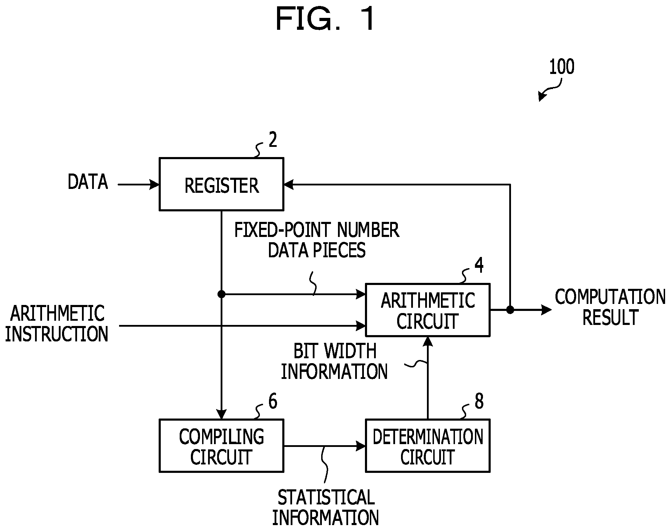

FIG. 1 illustrates an example of an arithmetic processing device in an embodiment. An arithmetic processing device 100 illustrated in FIG. 1 may be a dedicated processor used for inference such as image recognition by a neural network, or may be a processor such as a graphics processing unit (GPU) or a central processing unit (CPU).

The arithmetic processing device 100 includes a register 2, an arithmetic circuit 4, an acquiring circuit 6, and a determination circuit 8. The register 2 stores therein multiple fixed-point number data pieces.

The arithmetic circuit 4 executes computing by using fixed-point number data pieces output from the register 2 based on an arithmetic instruction, and outputs the computation result. The computation result may be stored in the register 2, or may be stored in a memory not illustrated.

For example, the number of input bits of the arithmetic circuit 4 is 16 bits, and the number of bits in a fixed-point number data piece computable by the arithmetic circuit 4 is 16 bits, 8 bits, 5 bits, 4 bits, 3 bits, or 2 bits, including 1 bit for a sign bit. For example, the arithmetic circuit 4 is capable of executing not only computing on 16 bits, but also parallel computing on two 8-bit fixed-point number data pieces or parallel computing on three 5-bit fixed-point number data pieces.

The arithmetic circuit 4 is also capable of executing parallel computing on four 4-bit fixed-point number data pieces, executing parallel computing on five 3-bit fixed-point number data pieces, or executing parallel computing on eight 2-bit fixed-point number data pieces. The arithmetic circuit 4 executes computing by using fixed-point number data pieces, the number of which is set in accordance with a bit width determined by the determination circuit 8. The computation result is stored in, for example, the register 2.

The arithmetic circuit 4 may be a single instruction multiple data (SIMD) arithmetic circuit that executes an SIMD instruction. In this case, the arithmetic circuit 4 is able to execute computing on 16 bits alone or execute parallel computing on any of 8 bits, 4 bits, and 2 bits.

The acquiring circuit 6 receives multiple fixed-point number data pieces output from the register 2 based on the arithmetic instruction, and compiles statistical information indicating a distribution of the most significant bit positions in the received multiple fixed-point number data pieces. The determination circuit 8 identifies a most-frequent bit position that is a position having the largest number of the most significant bits, based on the statistical information compiled by the acquiring circuit 6. The determination circuit 8 determines a bit width for fixed-point number data pieces to be used for computing based on the identified most-frequent bit position, and outputs bit width information indicating the determined bit width to the arithmetic circuit 4. The least significant bit in the determined bit width may be a bit to be rounded (referred to as a rounding target bit below). In this case, the arithmetic circuit 4 executes computing using data pieces having a number of bits that is less than the bit width by 1 bit. When a sign bit of 1 bit is added to a data piece, the bit width of the data piece including the sign bit to be used for computing by the arithmetic circuit 4 is the same as the bit width determined by the determination circuit 8.

For example, the acquiring circuit 6 and the determination circuit 8 operate in parallel with the arithmetic circuit 4, and the arithmetic circuit 4 executes, based on the bit width which is determined by the determination circuit 8 during execution of computing based on an arithmetic instruction, the next arithmetic instruction. The acquiring circuit 6 and the determination circuit 8 may compile statistical information based on a group of data pieces output from the register 2 before execution of an arithmetic instruction, and then determine the bit width. The arithmetic circuit 4 may execute the arithmetic instruction by using data pieces having the bit width determined by the determination circuit 8. In this case, it is possible to execute computing on data pieces having the bit width determined by using the statistical information of data pieces to be used for the computing, therefore further improving the recognition precision of recognition processing to be described later.

Data pieces to be subjected to the inference processing may be divided into multiple groups each including a certain number of data pieces, and the acquiring circuit 6 may compile the statistical information for each group of data pieces. In this case, the determination circuit 8 determines the bit width for each group based on the statistical information. Using bits corresponding to the bit width determined for one of the groups, the arithmetic circuit 4 executes computing on the next group.

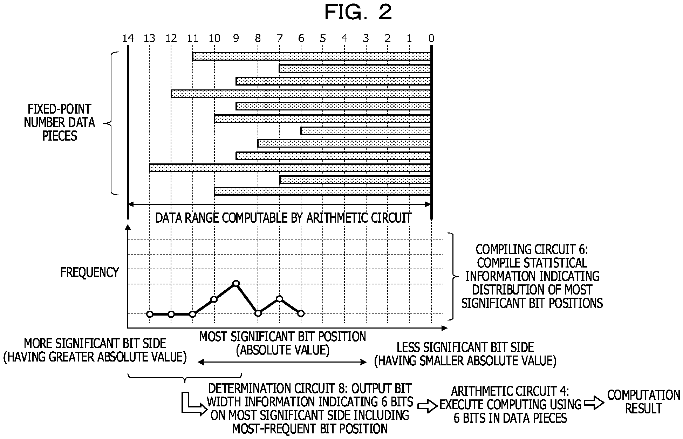

FIG. 2 illustrates an example of an operation performed in inference processing by the arithmetic processing device 100 in FIG. 1. For example, FIG. 2 illustrates an arithmetic processing method performed by the arithmetic processing device 100. In FIG. 2, each of long narrow dotted rectangles represents a fixed-point number data piece, and the left end of the rectangle represents the most significant bit. In a 16-bit fixed-point number data piece, the data segment excluding the sign bit includes 15 bits. The left and right thick vertical lines of input data indicate the most significant bit and the least significant bit, respectively, in the 15-bit data segment, and the numerical values of 0 to 14 on the upper side in FIG. 2 indicate bit numbers.

In the example illustrated in FIG. 2, it is assumed that data pieces held in the register 2 for executing computing are 16-bit fixed-point number data pieces, and that the acquiring circuit 6 uses 12 data pieces to compile the statistical information at one time. Each fixed-point number data piece represents an absolute value, which is either a positive value or a negative value. The most significant bit in each fixed-point number data piece is a bit in which "1" appears first on the most significant side except for the sign bit in a positive value, or in which "0" appears first on the most significant side except for the sign bit in a negative value.

As indicated by the histogram of a line graph, the acquiring circuit 6 compiles statistical information indicating a distribution (frequency) of the most significant bit positions in the fixed-point number data pieces output from the register 2 based on the arithmetic instruction. The statistical information in FIG. 2 indicates that there is one fixed-point number data piece in which the most significant bit is each of the bits 13, 12, and 11, there are two fixed-point number data pieces in which the most significant bit is the bit 10, and there are three fixed-point number data pieces in which the most significant bit is the bit 9. Further, the statistical information indicates that there is one fixed-point number data piece in which the most significant bit is the bit 8, there are two fixed-point number data pieces in which the most significant bit is the bit 7, and there is one fixed-point number data piece in which the most significant bit is the bit 6. There are no fixed-point number data pieces in which the most significant bit is any of the bit 14 and the bits 5 to 0.

The determination circuit 8 identifies the most significant bit position having the highest frequency (most-frequent bit position) based on the statistical information and determines the bit width for data pieces to be used for the computing by the arithmetic circuit 4 based on the identified most-frequent bit position. In the example illustrated in FIG. 2, the determination circuit 8 determines, as the bit width, 6 bits from the bit 14, which is the most significant bit in the greatest value in the 12 input data pieces, to the bit 9 at the most-frequent bit position, and outputs bit width information indicating the determined bit width. For example, the bit width information may include a value indicating the bit width (for example, "6"), or may include the bit number at the most-frequent bit position (for example, "9").

The arithmetic circuit 4 executes computing for the number of parallel computing processes determined by the bit width information received from the determination circuit 8, and outputs the computation result. For example, when the bit width information indicates 7 bits, 6 bits, or 5 bits, the arithmetic circuit 4 executes parallel computing using two data pieces (16 ≥ (7 + 1) × 2, 16 ≥ (6 + 1) × 2, or 16 ≥ (5 + 1) × 2). When the bit width information indicates 4 bits, the arithmetic circuit 4 executes parallel computing using three data pieces (16 ≥ (4 + 1) × 3). When the bit width information indicates 3 bits, the arithmetic circuit 4 executes parallel computing using four data pieces (16 ≥ (3 + 1) × 4). When the bit width information indicates 2 bits, the arithmetic circuit 4 executes parallel computing using five data pieces (16 ≥ (2 + 1) × 5). When the bit width information indicates 1 bit, the arithmetic circuit 4 executes parallel computing using eight data pieces (16 ≥ (1 + 1) × 8). When the bit width information indicates any of 8 to 15 bits, the arithmetic circuit 4 executes computing using one data piece alone.

The bit width is equivalent to the number of bits in data pieces used for computing executed by the arithmetic circuit 4, and is less than the number of bits in the original 15-bit data piece. For example, the arithmetic circuit 4 compresses (quantizes) the data pieces in accordance with the bit width determined by the determination circuit 8, and executes parallel computing on the multiple data pieces thus compressed. The data compression may be performed by a data compression circuit provided between the register 2 and the arithmetic circuit 4. In this case, the bit width information is also supplied to the data compression circuit.

The arithmetic circuit 4 may execute rounding processing on the least significant bit in the fixed-point number data piece with the bit width specified by the bit width information, thereby removing the least significant bit from the computing target bits. In this case, when the bit width information indicates 6 bits, the arithmetic circuit 4 executes parallel computing using two data pieces (16 ≥ 6 × 2). When the bit width information indicates 5 bits, the arithmetic circuit 4 executes parallel computing using three data pieces (16 ≥ 5 × 3). When the bit width information indicates 4 bits, the arithmetic circuit 4 executes parallel computing using four data pieces (16 ≥ 4 × 4). When the bit width information indicates 3 bits, the arithmetic circuit 4 executes parallel computing using five data pieces (16 ≥ 3 × 5). When the bit width information indicates 2 bits, the arithmetic circuit 4 executes parallel computing using eight data pieces (16 ≥ 2 × 8).

As described above, the bit width for data pieces to be used for computing is determined based on the distribution of the most significant bit positions in the data pieces to be used for the computing. This makes it possible to compress (quantize) the data pieces, and accordingly to increase the number of parallel processes in computing as compared with the case where the data pieces are used without compression (quantization). The more significant a bit in a fixed-point number data piece used in inference processing by the neural network, the larger the influence on the precision of the inference processing. On the other hand, less significant bits have smaller influence on the precision of the inference processing. For this reason, the recognition precision is often not changed even if the less significant bits are removed from the computing target. Therefore, applying the technique illustrated in FIG. 2 to the arithmetic processing device 100 leads to improvement of the computational efficiency of the inference processing by the neural network while maintaining the recognition precision of the inference processi ng.

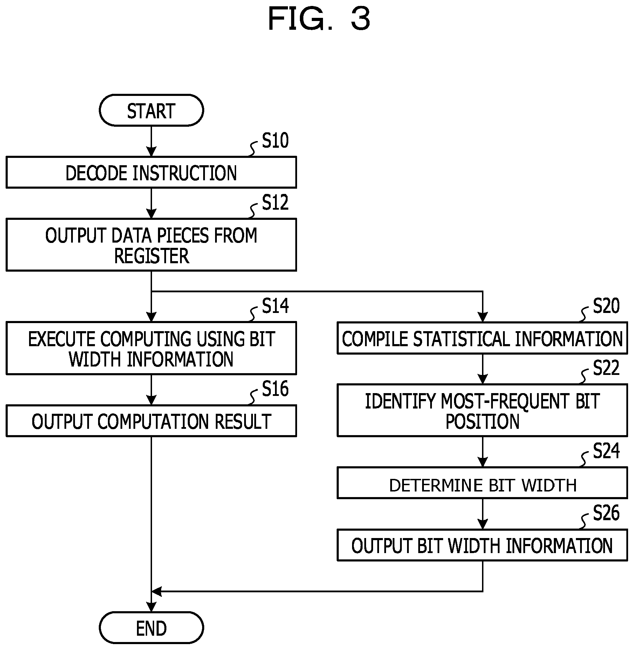

FIG. 3 illustrates an example of an operation procedure in inference processing by the arithmetic processing device 100 illustrated in FIG. 1. For example, FIG. 3 illustrates the arithmetic processing method by the arithmetic processing device 100.

First, in step S10, the arithmetic processing device 100 decodes an arithmetic instruction by using an instruction decoder not illustrated. Next, in step S12, multiple data pieces usable for computing are output from the register 2 based on the decoding result of the arithmetic instruction. After step S12, the arithmetic circuit 4 executes computing in steps S14 and S16, while the acquiring circuit 6 compiles the statistical information and the determination circuit 8 determines the bit width in steps S20, S22, S24, and S26.

In step S14, the arithmetic circuit 4 selects, based on the bit width information from the determination circuit 8, a number of data pieces usable for the computing among the multiple data pieces output from the register 2. The arithmetic circuit 4 selects, based on the bit width information, bits to be used for the computing from each of the number of selected data pieces, and executes the computing using the selected bits.

For example, the bits selected by the arithmetic circuit 4 are bits in a range from the most significant bit excluding the sign bit to the bit at the most-frequent bit position indicated by the bit width information. The arithmetic circuit 4 may execute the rounding processing of the least significant bit in the selected bits, and then execute the computing on the data pieces. Next, in step S16, the arithmetic circuit 4 outputs the computation result and ends the operation.

For example, after determining the bit width for the data pieces, the determination circuit 8 continuously outputs signals indicating the bit width information (at the fixed level). In this case, the bit width information received by the arithmetic circuit 4 in step S14 may also be bit width information determined from data pieces used in an arithmetic instruction already executed.

Meanwhile, in step S20, the acquiring circuit 6 compiles the statistical information on the data pieces output from the register 2 in step S12. The compiling of the statistical information in step S20 may be performed for each group including a predetermined number of data pieces. In this case, the operation in steps S22, S24, and S26 is executed based on the statistical information compiled for each group.

Next, in step S22, the determination circuit 8 identifies, based on the statistical information, the most-frequent bit position which is the position having the largest number of the most significant bits in the distribution of the most significant bit positions.

Next, in step S24, the determination circuit 8 determines the bit width for the data pieces to be used for the computing based on the most significant bit position in the data piece having the greatest value and the most-frequent bit position. Next, in step S26, the determination circuit 8 outputs the bit width information indicating the determined bit width and ends the operation. If the arithmetic circuit 4 has already started execution of a decoded arithmetic instruction at the time when the bit width information is output, the bit width information may be used for an arithmetic instruction issued after the bit width information is output.

As described above, in the embodiment illustrated in FIGs. 1 to 3, it is possible to improve the computational efficiency of the inference processing by the neural network while maintaining the recognition precision of the inference processi ng.

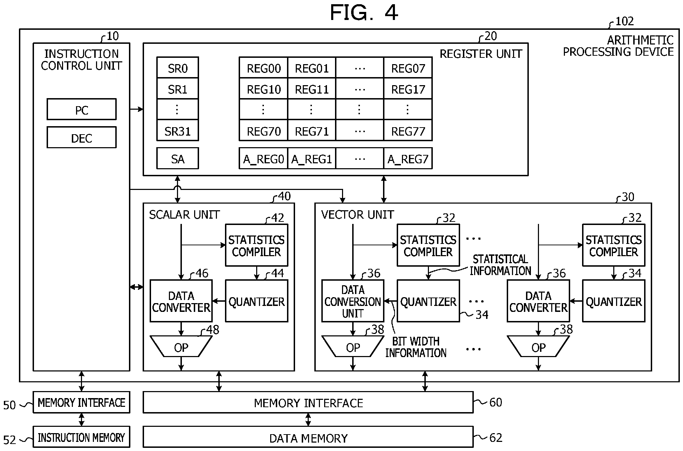

FIG. 4 illustrates an example of an arithmetic processing device in another embodiment. An arithmetic processing device 102 illustrated in FIG. 4 includes an instruction control unit 10, a register unit 20, a vector unit 30, and a scalar unit 40. The instruction control unit 10 is coupled to an instruction memory 52 via a memory interface 50. The vector unit 30 and the scalar unit 40 are coupled to a data memory 62 via a memory interface 60. For example, a memory access controller (MAC) may be used as the memory interfaces 50 and 60.

The instruction control unit 10 includes, for example, a program counter PC, an instruction decoder DEC, and so on. The instruction control unit 10 fetches an instruction from the instruction memory 52 based on an address indicated by the program counter PC, and supplies the fetched instruction to the instruction decoder DEC. The instruction decoder DEC decodes the fetched instruction, and issues the decoding result to the register unit 20, the vector unit 30, and the scalar unit 40, which are arithmetic units. The instruction control unit 10 may include an instruction buffer and an instruction cache for prefetching instructions.

The register unit 20 includes vector registers REG (REG00 to REG77) and vector accumulate registers A_REG (A_REG0 to A_REG7) which are used by the vector unit 30. For example, each vector register REG is of 16 bits, and is assigned to one of eight register sets (REG00-REG07 to REG70-REG77) each including eight vector registers REGn0 to REGn7 (n is an integer of 0 to 7). For example, each of the eight vector accumulate registers A_REG covers 16 bits plus a predetermined number of bits.

In the vector registers REGn0 to REGn7 and the vector accumulate registers A_REG0 to A_REG7, the number of computation elements is changed depending on the number of bits in the computing target data piece including the sign bit of 1 bit. For example, the number of computation elements is 1 when the computing target data piece includes 9 to 16 bits, and the number of computation elements is 2 when the computing target data piece includes 6 to 8 bits. The number of computation elements is 3 when the computing target data piece includes 5 bits, and the number of computation elements is 4 when the computing target data piece includes 4 bits. The number of computation elements is 5 when the computing target data piece includes 3 bits, and the number of computation elements is 8 when the computing target data piece includes 2 bits.

The register unit 20 includes scalar registers SR (SR0 to SR31) and a scalar accumulate register SA which are used by the scalar unit 40. For example, each of the scalar registers SR is of 16 bits, and the scalar accumulate register SA covers 16 bits plus a predetermined number of bits. Note that the number of registers, the number of bits in each register, and the types of registers in the register unit 20 are not limited to those illustrated in FIG. 4. In the following description, the various types of registers in the register unit 20 are simply referred to as the registers in some cases.

The vector unit 30 includes, for example, eight elementary arithmetic units. The vector unit 30 has functions of executing operations such as integer arithmetic and multiply-and-accumulate operations using the vector accumulate registers A_REG. The vector unit 30 also performs clearing of the vector accumulate registers A_REG, a multiply-and-accumulate (MAC) operation, a cumulative addition operation, transfer of data to the vector registers REG, and so on. In addition, the vector unit 30 loads data from the data memory 62 and stores data into the data memory 62.

Each arithmetic unit in the vector unit 30 includes a statistics acquiring unit 32, a quantizer 34, a data converter 36, and an integer arithmetic logic unit (OP) 38. The statistics acquiring unit 32, the quantizer 34, and the data converter 36 are provided for each of the integer arithmetic logic units 38. The statistics acquiring unit 32 is an example of the acquiring circuit, the quantizer 34 is an example of the determination circuit, and the integer arithmetic logic unit 38 is an example of the arithmetic circuit. The functions of the data converter 36 may be included in the integer arithmetic logic unit 38. The vector unit 30 receives an input of data pieces stored in the vector registers REGn0 to REGn7, and executes parallel computing by the integer arithmetic logic units 38 in the eight elementary arithmetic units. Then, the vector unit 30 stores output data pieces, which are the computation results, in another set of the vector registers REGn0 to REGn7. The vector unit 30 executes the multiply-and-accumulate operations by the integer arithmetic logic units 38 in the eight elementary arithmetic units, respectively, and stores the accumulated sum values of the multiply-and-accumulate operation results into the vector accumulate registers A_REG0 to A_REG7, respectively.

The scalar unit 40 includes a statistics acquiring unit 42, a quantizer 44, a data converter 46, and an integer arithmetic logic unit (OP) 48. The acquiring unit 42 is an example of the acquiring circuit, the quantizer 44 is an example of the determination circuit, and the integer arithmetic logic unit 48 is an example of the arithmetic circuit. The functions of the data converter 46 may be included in the integer arithmetic logic unit 48. The scalar unit 40 has functions of executing operations such as four arithmetic operations, a shift operation, a branch operation, and load and store operations. The scalar unit 40 executes computing using the scalar registers SR and the scalar accumulate register SA. For example, the integer arithmetic logic unit 48 executes computing on an input data piece stored in any of the scalar registers SR, and stores an output data piece as a computation result into another scalar register SR. When performing a multiply-and-accumulate operation, the integer arithmetic logic unit 48 stores the result of the multiply-and-accumulate operation into the scalar accumulate register SA. The computation result of the scalar unit 40 is stored in any of the scalar registers SR, the scalar accumulate register SA, and the data memory 62.

The functions of the statistics acquiring units 32 and 42 are substantially the same as those of the acquiring circuit 6 illustrated in FIG. 1. For example, each of the acquiring units 32 and 42 receives multiple fixed-point number data pieces output from the register unit 20 based on an arithmetic instruction, and compiles the statistical information indicating the distribution of the most significant bit positions in the multiple fixed-point number data pieces received. Each of the statistics acquiring units 32 and 42 may compile the statistical information on several hundreds of data pieces or several to several tens of thousands of data pieces to be used for multiple arithmetic instructions.

The functions of the quantizers 34 and 44 are substantially the same as those of the determination circuit 8 illustrated in FIG. 1. For example, each of the quantizers 34 and 44 identifies the most-frequent bit position, which is the most significant bit position having the highest frequency, based on the statistical information compiled by the corresponding acquiring unit 32 or 42. Each of the quantizers 34 and 44 determines the bit width for fixed-point number data pieces to be used for the computing based on the identified most-frequent bit position and outputs the determined bit width as the bit width information. Each quantizer 34 outputs the bit width information indicating the determined bit width to the corresponding data converter 36. The quantizer 44 outputs the bit width information indicating the determined bit width to the data converter 46.

The bit width information may be information indicating the number of bits starting with the most significant bit in the data piece having the greatest value, or may be a bit number indicating the least significant bit in a data piece specified by the bit width. For example, it is assumed that the data segment excluding the sign bit includes 15 bits, and that the bit number of the most significant bit in the data segment is "14". In this case, the quantizer 34 may output the bit width information indicating the bit number 10 based on the determined bit width (= 5 bits).

Each data converter 36 selects a certain number of data pieces computable by the integer arithmetic logic unit 38 based on the bit width information from among the multiple data pieces output from the register unit 20 based on the arithmetic instruction. Each data converter 36 compresses (quantizes) the number of bits of the certain number of selected data pieces based on the bit width information. For example, the data converter 36 compresses the certain number of fixed-point number data pieces output from the register unit 20 based on the bit width information such that the total number of bits in the compressed data pieces is equal to or less than the number of input bits of the integer arithmetic logic unit 38.

Each data converter 36 executes the rounding processing of the least significant bit in each compressed data piece, and outputs the number of data pieces thus rounded to the corresponding integer arithmetic logic unit 38. The rounding processing causes the information in the least significant bit to be included in the more significant bits than the least significant bit. This enables a reduction in the number of bits in each data piece to be output to the integer arithmetic logic unit 38, and accordingly an increase in the number of data pieces to be output to the integer arithmetic logic unit 38. This also results in an increase in the number of parallel processes to be executed by the integer arithmetic logic units 38, and accordingly improvement in the computational efficiency.

The functions of the data converter 46 are substantially the same as those of the data converter 36. For example, the data converter 46 selects a certain number of data pieces computable by the integer arithmetic logic unit 48 based on the bit width information from among the multiple data pieces output from the register unit 20, and compresses (quantizes) the number of bits of the certain number of selected data pieces based on the bit width information. For example, the data converter 46 compresses the number of fixed-point number data pieces output from the register unit 20 based on the bit width information such that the total number of bits in the compressed data pieces is equal to or less than the number of input bits of the integer arithmetic logic unit 48. In addition, the data converter 46 executes the rounding processing of the least significant bit in each compressed data piece, and outputs the number of data pieces thus rounded to the integer arithmetic logic unit 48. In each of the data converters 36 and 46, the unselected data pieces will be used in sequence in execution of a subsequent arithmetic instruction.

The statistics acquiring unit 32, the quantizer 34, and the data converter 36 are provided for each of the integer arithmetic logic units 38. Alternatively, a single statistics acquiring unit 32, a single quantizer 34, and a single data converter 36 may be shared by the multiple integer arithmetic logic units 38. In this case, the statistics acquiring unit 32 compiles multiple pieces of statistical information on data pieces to be supplied from the register unit 20 to the respective integer arithmetic logic units 38. The quantizer 34 outputs multiple pieces of bit width information indicating the bit widths determined based on the respective pieces of statistical information to the data converter 36. The data converter 36 compresses (quantizes) each of the fixed-point number data pieces to be supplied to each of the integer arithmetic logic units 38 to the number of bits based on the corresponding piece of bit width information. The shared use of the statistics acquiring unit 32, the quantizer 34, and the data converter 36 makes it possible to reduce the circuit scale of the vector unit 30 as compared with the case without the shared use.

The integer arithmetic logic unit 38 is a 16-bit arithmetic logic unit. The integer arithmetic logic unit 38 is capable of executing not only computing on a 16-bit data piece, but also parallel computing on two 8-bit data pieces, parallel computing on three 5-bit data pieces, parallel computing on four 4-bit data pieces, parallel computing on five 3-bit data pieces, or parallel computing on eight 2-bit data pieces. Since each data piece includes a sign bit, the number of bits representing the data value used in the computing is less than the number of bits in the data piece by 1 bit.

The integer arithmetic logic unit 48 is a 16 bit arithmetic logic unit. The integer arithmetic logic unit 48 is capable of executing not only computing on a 16-bit data piece, but also parallel computing on two 8-bit data pieces, parallel computing on three 5-bit data pieces, parallel computing on four 4-bit data pieces, parallel computing on five 3-bit data pieces, or parallel computing on eight 2-bit data pieces. Since each data piece includes a sign bit, the number of bits representing the data value used in the computing is less than the number of bits in the data piece by 1 bit.

In addition, the integer arithmetic logic unit 38 may receive the bit width information output from the quantizer 34 if the integer arithmetic logic unit 38 wants to recognize the number of parallel processes of data pieces to be subjected to computing. Similarly, the integer arithmetic logic unit 48 may receive the bit width information output from the quantizer 44 if the integer arithmetic logic unit 48 wants to recognize the number of parallel processes of data pieces to be subjected to computing. The integer arithmetic logic units 38 and 48 may be SIMD arithmetic logic units. In this case, each of the integer arithmetic logic units 38 and 48 is able to execute computing on 16 bits alone or execute parallel computing on any of 8 bits, 4 bits, and 2 bits.

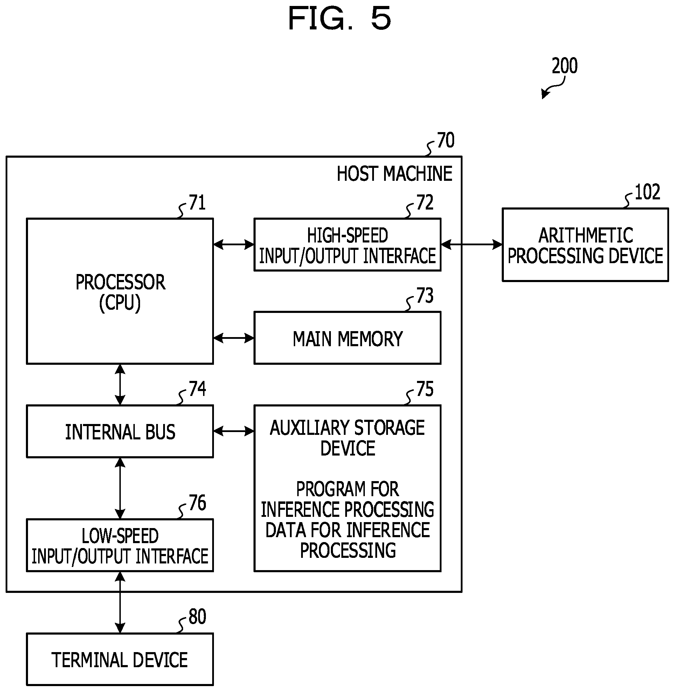

FIG. 5 illustrates an example of an information processing apparatus equipped with the arithmetic processing device 102 illustrated in FIG. 4. An information processing apparatus 200 illustrated in FIG. 5 is, for example, a server, and includes a host machine 70, a terminal device 80 coupled to the host machine 70 so as to be able to access the host machine 70, and the arithmetic processing device 102 (FIG. 4) coupled to the host machine 70 via a dedicated interface. The arithmetic processing device 102 may be mounted on a motherboard of the host machine 70. In place of the arithmetic processing device 102, the arithmetic processing device 100 illustrated in FIG. 1 may be coupled to the host machine 70. The information processing apparatus 200 executes the inference processing by the neural network by operating the arithmetic processing device 102.

The host machine 70 includes a processor 71 such as a CPU, a high-speed input/output interface 72 for coupling the host machine 70 to the arithmetic processing device 102, a main memory 73, and an internal bus 74. The host machine 70 further includes an auxiliary storage device 75 such as a large-capacity hard disk drive (HDD) coupled to the internal bus 74, and a low-speed input/output interface 76 coupled to the internal bus 74 for coupling the host machine 70 to the terminal device 80. The host machine 70 is an example of a controller that controls the arithmetic processing device 102.

The processor 71 loads programs stored in the auxiliary storage device 75 onto the main memory 73, and executes the loaded programs. The high-speed input/output interface 72 is, for example, a Peripheral Component Interconnect (PCI) Express interface. The main memory 73 is, for example, a synchronous dynamic random-access memory (SDRAM) or a high bandwidth memory (HBM), and stores data and the programs to be executed by the processor 71.

The internal bus 74 couples the processor 71 to a peripheral device which operates at a speed lower than the operation speed of the processor 71, and relays communication between the processor 71 and the peripheral device. The low-speed input/output interface 76 is, for example, a Universal Serial Bus (USB) interface, couples a keyboard and a mouse of the terminal device 80 to the host machine 70, and couples the host machine 70 to an Ethernet network. The auxiliary storage device 75 stores therein a program for inference processing, data for inference processing, and so on.

A user of the information processing apparatus 200 accesses the host machine 70 from the terminal device 80, and causes the arithmetic processing device 102 to execute the inference processing and so on. The host machine 70 transmits the program for inference processing to be executed by the arithmetic processing device 102 to the arithmetic processing device 102 in accordance with an instruction from the terminal device 80. Then, the arithmetic processing device 102 executes the received program, and executes the inference processing on image data or the like transmitted from the host machine 70.

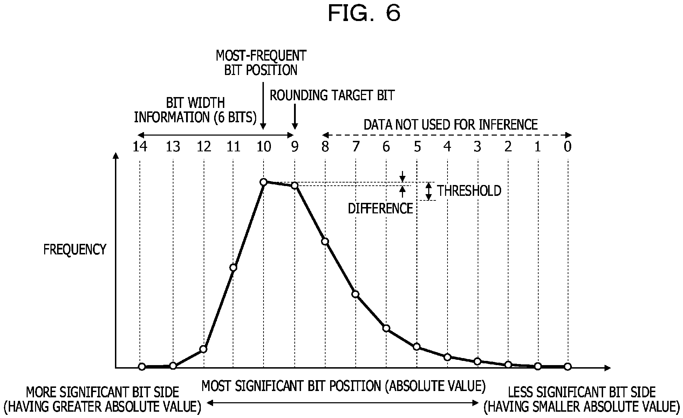

FIG. 6 illustrates an example of the distribution of the most significant bits in a certain number of fixed-point number data pieces to be used in an inference model of the neural network. For example, the distribution illustrated in FIG. 6 is obtained by the statistics acquiring unit 32 or the statistics acquiring unit 42 illustrated in FIG. 4. As in FIG. 2 described above, the distribution illustrated in FIG. 6 represents the distribution including both positive and negative values (absolute values), and the most significant bit is a bit in which "1" appears first on the most significant side except for the sign bit in a positive value, or in which "0" appears first on the most significant side except for the sign bit in a negative value. Since the operations of the statistics acquiring unit 42 and the quantizer 44 are substantially the same as those of the statistics acquiring unit 32 and the quantizer 34, the operations of the statistics acquiring unit 32 and the quantizer 34 will be described below for the sake of simplicity.

FIG. 6 illustrates data pieces before quantization (compression) (for example, 15 bits except for the sign bit; bits 14 to 0). It is assumed in the present embodiment that the maximum value of the data bit width used in each layer in the inference model of the neural network is 15 bits in which the most significant bit corresponds to a data piece having the greatest value in all the data pieces to be used for inference.

In the distribution illustrated in FIG. 6, the quantizer 34 identifies the bit 10 as the most-frequent bit position, which is the most significant bit position having the highest frequency in the statistical information. In addition, the quantizer 34 identifies the bit 9 as a second bit position, which is the most significant bit position having the second highest frequency in the statistical information. Then, the quantizer 34 detects that the second bit position is less significant side than the most-frequent bit position by 1 bit, and determines whether or not the difference in frequency between the most-frequent bit position and the second bit position is less than a threshold.

In the example of FIG. 6, since the difference in frequency is less than the threshold, the quantizer 34 determines the second bit position (bit 9) as a rounding target bit position. In other words, the quantizer 34 determines the second bit position as the most-frequent bit position. Then, the quantizer 34 outputs the bit width information indicating a bit width (6 bits) from the most significant bit (bit 14) to the rounding target bit (bit 9). Alternatively, the quantizer 34 may output the bit number 9 of the rounding target bit as the bit width information.

In a case where the second bit position is not less significant side than the most-frequent bit position by 1 bit, the quantizer 34 determines the most-frequent bit position as the rounding target bit position. In another case where the second bit position is less significant side than the most-frequent bit position by 1 bit and where the difference in frequency between the most-frequent bit position and the second bit position is equal to or greater than the threshold, the quantizer 34 determines the most-frequent bit position as the rounding target bit position. Then, the quantizer 34 outputs the bit width information indicating a bit width (5 bits) from the most significant bit (bit 14) to the rounding target bit (bit 10).

In still another case where the second bit position is located at a place less significant side than the most-frequent bit position by n bits (for example, n is any of integers of 1 to 3) and where the difference in frequency between the most-frequent bit position and the second bit position is less than the threshold, the quantizer 34 may determine the second bit position as the most-frequent bit position.

For example, there is a case where the frequency of the most significant bits in data pieces are distributed over adjacent bits. In this case, if the most-frequent bit position is determined as the rounding target bit, the data pieces held in the second bit position located at a place less significant side than the most-frequent bit position will be discarded, so that the recognition precision may be lowered. If the second bit position having the second highest frequency is located at a place less significant than the most-frequent bit position, it is possible to suppress a deterioration in the recognition precision by determining the second bit position as the most-frequent bit position and therefor as the rounding target bit. This enables a reduction in the number of bits in data pieces to be used for computing by the integer arithmetic logic unit 38 without deteriorating the recognition precision. This also results in an increase in the number of data pieces in parallel processes to be executed by the integer arithmetic logic unit 38, and accordingly improvement in the computational efficiency of the arithmetic processing device 102.

Data pieces each having the most significant bit in a range indicated by a broken line double-headed arrow in FIG. 6 are discarded as "0". However, in the inference processing, a data piece having a small value has a small influence on the inference result, and therefore the recognition precision does not deteriorate even if the data piece is discarded as "0".

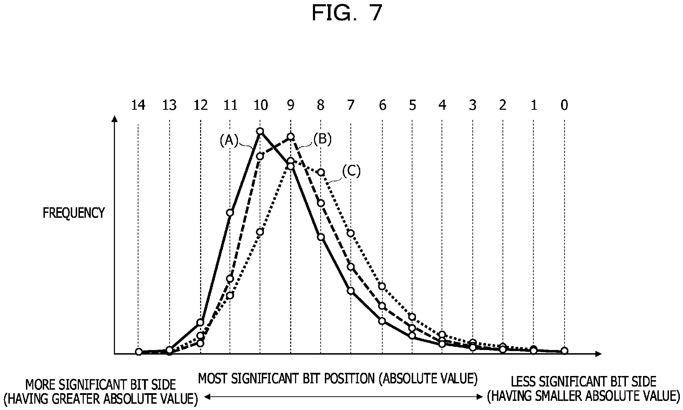

FIG. 7 illustrates an example of variations in the distribution of the most significant bits in a certain number of fixed-point number data pieces to be used in the inference model of the neural network. As illustrated in FIG. 7, the statistical information varies for each of groups of data pieces to be subjected to computing. When the most-frequent bit position is changed depending on the statistical information, the bit width information output from the quantizers 34 and 44 is also changed.

For example, in the case where the arithmetic processing device 102 executes the inference processing by using each of images included in a moving image shot by a camera, temporally adjacent images have features similar to each other, and accordingly have similar distributions of the most significant bit positions. For this reason, for example, when the data pieces in each image are set as one group and the inference processing is executed for each group, adjacent groups have similar distributions of the most significant bit positions.

Therefore, use of a bit width obtained from the statistical information on the data pieces in an immediately preceding group in execution of computing on the subsequent group does not deteriorate the recognition precision of the inference processing but maintains the recognition precision. For example, it is assumed that the distributions of the most significant bit positions in three temporally successive images included in a moving image are distributions (A), (B), and (C) in FIG. 7 in chronological order. The distributions (A), (B), and (C) are similar to each other. For this reason, for example, even if the computing on the data pieces in the distribution (B) is executed by using the bit width obtained from the distribution (A), it is possible to maintain the recognition precision of the inference processing. Similarly, even if the computing on the data pieces in the distribution (C) is executed by using the bit width obtained from the distribution (B), it is possible to maintain the recognition precision of the inference processing.

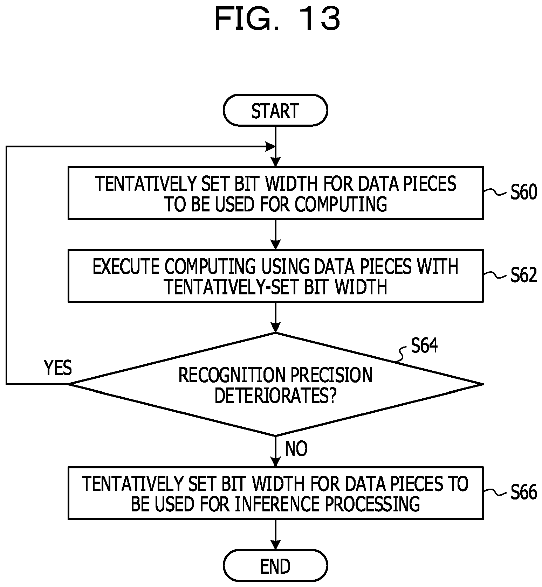

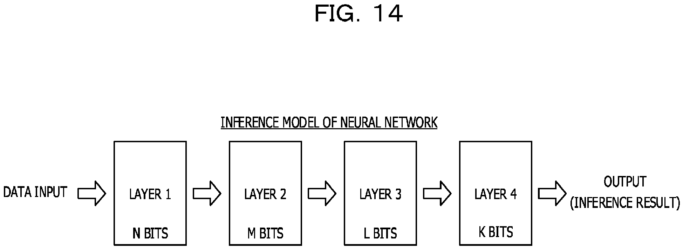

On the other hand, two images shot at time points with a long lag in the moving image have such low degrees of similarity that the most-frequent bit positions of the respective images obtained from the statistical information tend to largely deviate from each other, and accordingly the bit widths determined from the most-frequent bit positions also tend to differ from each other. Therefore, when an optimal bit width for the distributions (A), (B) and (C) is set by using a technique to be described later with reference to FIGs. 13 and 14, the recognition precision of the inference processing for an image shot at a time point greatly different from those of the images from which the distributions (A), (B) and (C) are obtained may deteriorate.

In contrast, in this embodiment, the bit width determined based on the statistical information on the data pieces in the immediately preceding group is used to execute the computing processing on the data pieces in the subsequent group. For example, the bit width is determined based on the statistical information on the data pieces in an image shot at an adjacent time point and therefore having a high degree of similarity, and the inference processing is executed by using the determined bit width. This makes it possible to maintain the recognition precision in each image in the moving image.

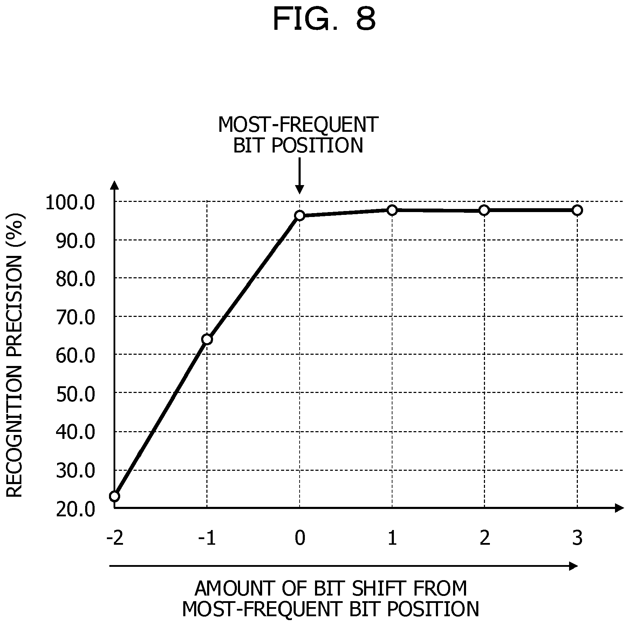

FIG. 8 illustrates an example of a change in the recognition precision of the inference processing in the case where the bit width is set based on a bit position shifted by a given number of bits from the most-frequent bit position identified by the quantizers 34 and 44. In the case where the bit width information is set based on a bit position shifted from the identified most-frequent bit position to a significant bit position side, the recognition precision is remarkably reduced due to the exclusion of data pieces in the most-frequent bit position. Therefore, it is desirable that the most-frequent bit position be covered by the bit width information.

On the other hand, in the case where the bit width information is set based on a bit position shifted from the identified most-frequent bit position to a less significant bit position side, the recognition precision is slightly improved. In this case, however, the bit width is increased and therefore the number of parallel processes in the computing by the integer arithmetic logic units 38 and 48 is reduced, which results in deterioration of the computational efficiency. Therefore, it is preferable that an amount of shift to a less significant bit position side be set to about 1 bit from the most-frequent bit position as described with reference to FIG. 6. This makes it possible to improve the computational efficiency of the inference processing while maintaining the recognition precision of the inference processing.

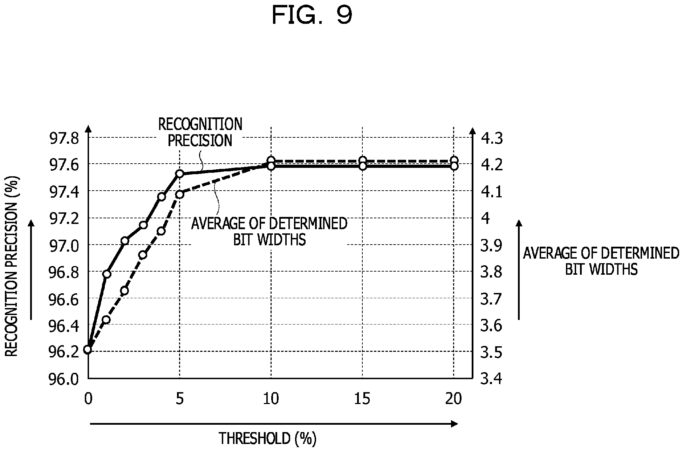

FIG. 9 illustrates an example of a change in the recognition precision with a change in the threshold. As described with reference to FIG. 6, when the second bit position having the second highest frequency is located at a place less significant side than the most-frequent bit position by 1 bit, the threshold is used to determine whether or not to set the second bit position as the rounding target bit. The threshold indicates a difference in frequency between the most-frequent bit position and the bit position at less significant side than the most-frequent bit position by 1 bit, and is expressed by, for example, a percentage where the frequency at the most-frequent bit position is 100%. In FIG. 9, a threshold of 0% means that the most-frequent bit position is set as the rounding target bit without exception.

The right vertical axis in FIG. 9 indicates an example of variations in the bit width (average value) with a change in the threshold. The bit width is determined by the quantizer 34 or the quantizer 44 in order to determine the number of bits for data pieces to be used for the computing. For example, the average value of the variations in the bit width is an average value over all the layers in the neural network for the inference processing.

In FIG. 9, the recognition precision in the case where the threshold is set to 5% or more is nearly maximum, whereas the recognition precision in the case where the threshold is set to less than 5% decreases as the threshold approaches to 0%. For this reason, it is preferable to set the threshold to 5% or more. Meanwhile, the average of the bit widths in the case where the threshold is 5% is smaller than in the case where the threshold is 10% or more. Since the number of data pieces computable in parallel is reduced as the bit width increases, it is preferable to make the bit width as small as possible. For these reasons, it is seen that a threshold of 5% is preferable from both viewpoints of the recognition precision and the number of parallel processes in computing.

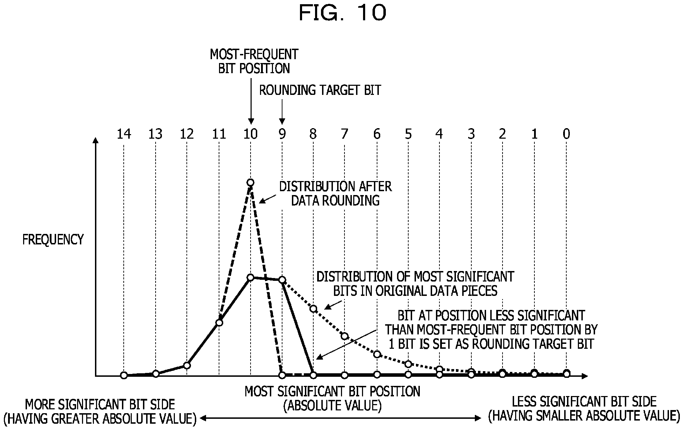

FIG. 10 illustrates an example of the distributions of the most significant bits in fixed-point number data pieces before and after a change in the data bit width. Since the operations of the acquiring unit 42, the quantizer 44, and the data converter 46 are substantially the same as those of the 32, the quantizer 34, and the data converter 36, the operations of the statistics acquiring unit 32, the quantizer 34, and the data converter 36 will be described below for the sake of simplicity. Note that histograms other than the histogram obtained from the original data pieces are presented just for explanation, and are not generated by the acquiring unit 32 and the like. The histogram before the change in the bit width is statistical information compiled by the acquiring unit 32, as illustrated in FIG. 6.

In the example illustrated in FIG. 10, the difference in frequency between the most-frequent bit position and the second bit position having the second highest frequency at less significant side than the most-frequent bit position by 1 bit is less than the threshold (for example, less than 5%) as described with reference to FIG. 6. For this reason, the quantizer 34 sets the bit at the less significant side than the most-frequent bit position by 1 bit as the rounding target bit. Thus, data pieces having the most significant bits at less significant side than the rounding target bit are set to "0", and are excluded from the frequency of the histogram.

The data converter 36 rounds off the data pieces to the rounding target bit position based on the bit width information output from the quantizer 34, and then moves the most significant bit in each data piece having the most significant bit at the rounding target bit to the more significant side than the rounding target bit by 1 bit. Then, two computing processes are executed in parallel by using data pieces in each of which a sign bit is added to 5 bits of the bits 14 to 10.

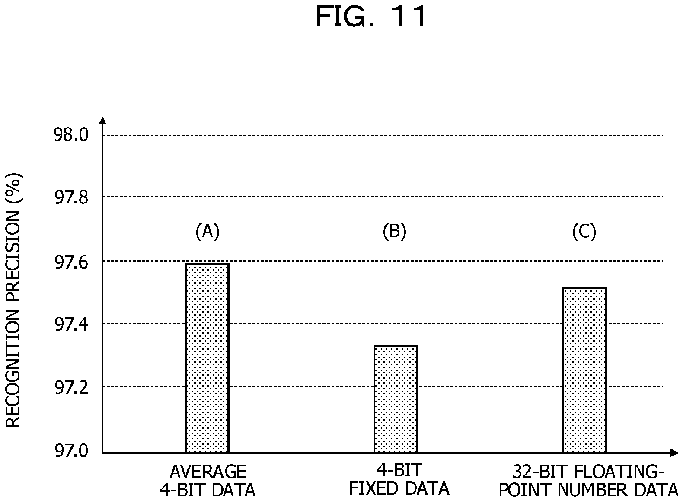

FIG. 11 illustrates an example of the recognition precision depending on types of data pieces used in the inference processing. In FIG. 11, a bar (A) indicates the recognition precision obtained when the arithmetic processing device 102 illustrated in FIG. 4 changes the bit width for data pieces according to the distribution of the most significant bits in the data pieces by using the technique illustrated in FIG. 6 and the average of the bit widths is 4 bits. In FIG. 11, a bar (B) indicates the recognition precision obtained when the bit width for data pieces is fixed to 4 bits. In FIG. 11, a bar (C) indicates the recognition precision obtained when another arithmetic processing device having a floating-point arithmetic logic unit executes the inference processing by using 32-bit floating-point number data pieces.

The bar (A) in FIG. 11 represents an example in which the average of the bit widths for fixed-point number data pieces used in the inference processing for all the layers in the neural network is 4 bits. In the example of the bar (A) in FIG. 11, the inference processing is executed by using such image data pieces that the average of the bit widths for the data pieces is 4 bits in order to make comparison with the bar (B) in FIG. 11. The bar (B) in FIG. 11 represents an example in which the bit width for fixed-point number data pieces used in the inference processing in all the layers in the neural network is fixed to 4 bits. The bar (C) in FIG. 11 represents an example in which 32-bit floating-point number data pieces are used in the inference processing in all the layers in the neural network.

As presented in FIG. 11, in the case where the average of the bit widths for the data pieces used in the inference is 4 bits, it is possible to improve the recognition precision of the inference processing as compared to the case where the bit width for the data pieces is fixed to 4 bits, and to achieve the recognition precision equal to or even higher than that in the case where the 32-bit floating-point number data pieces are used. In the case where the bit width for data pieces is fixed to 4 bits, the average of the bit widths is also 4 bits. When the averages of the bit widths are the same, the efficiency of instruction execution by the integer arithmetic logic units 38 and 48 is substantially the same. Therefore, the use of the technique illustrated in FIG. 6 makes it possible to improve the recognition precision even when the efficiency of instruction execution by the integer arithmetic logic units 38 and 48 remains substantially the same.

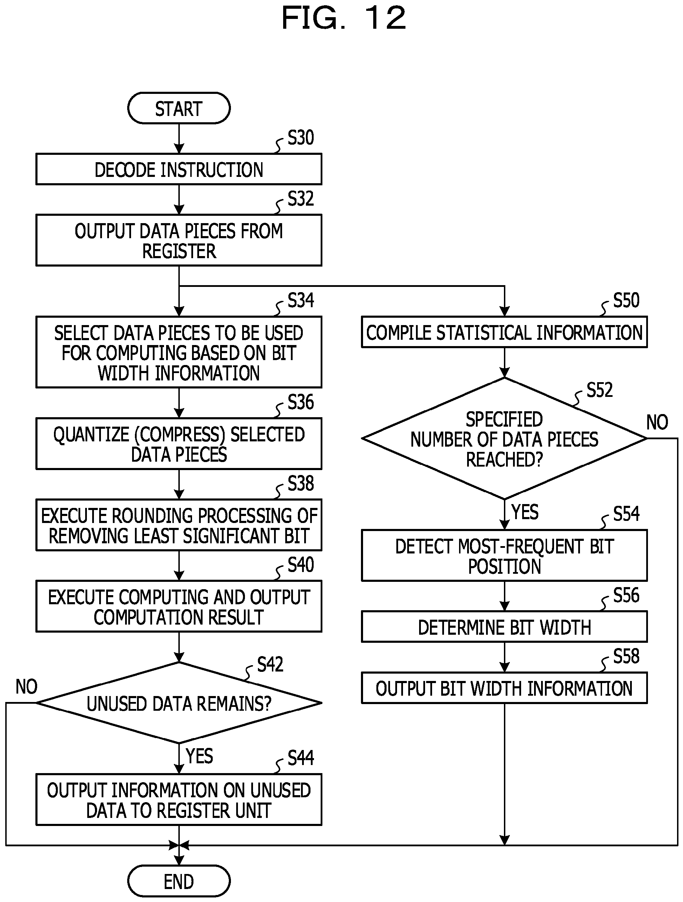

FIG. 12 illustrates an example of an operation procedure in the inference processing by the arithmetic processing device 102 illustrated in FIG. 4. For example, FIG. 12 illustrates the arithmetic processing method by the arithmetic processing device 102. Detailed explanation is omitted for the operations similar to or same as those illustrated in FIG. 3. Since the vector unit 30 and the scalar unit 40 operate in substantially the same manner except that they use different numbers of data pieces for computing, the operations of the vector unit 30 will be described below for the sake of simplicity.

First, in step S30, the instruction decoder DEC in FIG. 4 decodes an arithmetic instruction. Next, in step S32, multiple data pieces usable for computing are output from the register unit 20 based on the decoding result of the arithmetic instruction. After step S32, the data converter 36 converts the bit widths of the data pieces and the integer arithmetic logic unit 38 executes the computing in steps S34 to S44. In steps S50 to S58, the statistics acquiring unit 32 compiles the statistical information and the quantizer 34 determines the bit width.

In step S34, the data converter 36 selects a certain number of data pieces usable for the computing based on the bit width information from the quantizer 34, from among the multiple data pieces output from the register unit 20. For example, the quantizer 34 selects the data pieces so that the total number of bits in the data pieces to be used for the computing is 16 bits or less.

For example, when the bit width information indicates 2 bits, the data converter 36 selects eight data pieces because the number of bits in a data piece in which a sign bit is added to a 1-bit data segment after the rounding processing of the least significant bit is 2 bits. When the bit width information indicates 3 bits, the data converter 36 selects five data pieces because the number of bits in a data piece in which a sign bit is added to a 2-bit data segment after the rounding processing of the least significant bit is 3 bits. Similarly, the data converter 36 selects four data pieces when the bit width information indicates 4 bits, whereas the data converter 36 selects three data pieces when the bit width information indicates 5 bits. When the bit width information indicates 6 bits, 7 bits, or 8 bits, the data converter 36 selects two data pieces because the number of bits in a data piece in which a sign bit is added to a data segment after the rounding processing of the least significant bit is 6 bits, 7 bits, or 8 bits, respectively. When the bit width information indicates any number of bits in a range of 9 to 15 bits inclusive, the data converter 36 selects one data piece of 16 bits.

Next, in step S36, the data converter 36 quantizes (compresses) each data piece selected in step S34 by extracting the bits in the number specified by the bit width information from the data piece in descending order of bit significance excluding the sign bit. Next, in step S38, the data converter 36 executes the rounding processing of removing the least significant bit in each quantized data piece, and outputs the data piece thus rounded to the integer arithmetic logic unit 38. Here, steps S36 and S38 in the operation may be performed in reverse order. Next, in step S40, the integer arithmetic logic unit 38 executes the computing using the received data pieces, and outputs the computation result.

Next, the data converter 36 moves the operation to step S44 when unused data pieces, which have not been used for the computing among the data pieces output from the register unit 20, are found in step S42, or ends the operation when no unused data piece is found in step S42. In step S44, the data converter 36 outputs information on the unused data pieces to the register unit 20, and ends the operation. The register unit 20 does not discard the unused data pieces but retains them for use in the subsequent computing. The operation in steps S42 and S44 may be executed between any two successive ones of steps S34 to S40.

Meanwhile, in step S50, the statistics acquiring unit 32 compiles the statistical information on the data pieces output from the register unit 20 in step S32. Here, when unused data pieces, which have not been used for the computing, are output from the register unit 20, the statistics acquiring unit 32 does not compile the statistical information on the unused data pieces. This is because the statistical information on the unused data pieces was already compiled when the data pieces were output from the register unit 20 for the first time. This stops the same data from being compiled redundantly as the statistical information. The data pieces output from the register unit 20 may each additionally include an unused flag indicating whether the data piece has been used or not in order to determine whether or not to use the data piece to compile the statistical information.

Next, when the number of data pieces used to compile the statistical information reaches a specified number of data pieces in step S52, the statistics acquiring unit 32 instructs the quantizer 34 to start operating, and moves the operation to step S54. When the number of data pieces does not yet reach the specified number in step S52, the statistics acquiring unit 32 ends the operation. The specified number of data pieces may be the number of data pieces included in the group described with reference to FIG. 7.

Next, in step S54, the quantizer 34 detects the most-frequent bit position, which is the most significant bit position having the highest frequency, by using the statistical information compiled by the statistics acquiring unit 32. Note that when the second bit position having the second highest frequency is located at the less significant side than the most-frequent bit position by 1 bit and the difference in frequency between the most-frequent bit position and the second bit position is less than the threshold, the quantizer 34 sets the second bit position as the most-frequent bit position. Next, in step S56, the quantizer 34 determines the bit width for data pieces to be used for the computing. The data piece to be used for the computing includes a bit to be discarded by the rounding processing. Next, in step S58, the quantizer 34 outputs the bit width information determined in step S56 to the data converter 36, and ends the operation.

FIG. 13 illustrates an example of a procedure of compressing a data bit width to be executed by another arithmetic processing device after learning processing by a neural network. For example, the procedure illustrated in FIG. 13 is executed for each layer in the neural network for the inference processing.

First, in step S60, the arithmetic processing device tentatively sets the bit width for fixed-point number data pieces to be used for computing at a certain layer in the neural network based on the learning result. Next, in step S62, the arithmetic processing device performs the inference processing by executing the computing using the data pieces with the bit width tentatively set in step S60.

Subsequently, in step S64, the arithmetic processing device compares the output of the neural network for the inference processing with an expected value to evaluate the recognition precision. When the recognition precision deteriorates, the operation is returned to step S30, and the bit width for the data pieces to be used for the computing is set again. When the recognition precision does not deteriorate, the operation proceeds to step S66. For example, in step S60, the initial bit width is set to the smallest bit width among the settable bit widths, and the bit width is gradually incremented every time the operation is returned from step S64. For example, the data compression rate is highest at the initial stage, and is gradually decremented every time the operation is returned from step S64. Therefore, the bit width determined in step S64 as bringing about no deterioration in the recognition precision is the minimum bit width (maximum compression rate) that brings about no deterioration in the recognition precision.

In step S66, the arithmetic processing device determines that the bit width determined as bringing about no deterioration in the recognition precision will be set as the bit width for data pieces to be used in the neural network for the inference processing, and ends the operation. For example, the operation illustrated in FIG. 13 uses a huge number of sample data pieces to determine a data bit width which enables the recognition precision to be maintained over all the sample data pieces.

FIG. 14 illustrates an example of the inference model of the neural network designed according to the bit width determined in FIG. 13. For example, computing for inference processing with the inference model is executed by an arithmetic processing device for inference processing. In the neural network for the inference processing illustrated in FIG. 14, a layer 1, a layer 2, a layer 3, and a layer 4 are coupled together in this order from the input side to the output side, and the layer 4 outputs an inference result. Note that the number of layers included in the inference model is not limited to the number in FIG. 14. Data pieces of N bits, M bits, L bits, and K bits illustrated in the layers 1 to 4 have bit widths determined in step S66 in FIG. 13, and are data pieces in each of which the least significant bit is removed by the rounding processing and the sign bit is added as the most significant bit.

In the example illustrated in FIG. 14, the layer 1 executes computing processing using fixed-point number data pieces at N more significant bits in input data pieces, weight data pieces, and so on, and outputs output data pieces having a bit width larger than N bits to the layer 2. The layer 2 executes computing processing using the fixed-point number data pieces at M more significant bits in the data pieces output from the layer 1, weight data pieces, and so on, and outputs output data pieces having a bit width larger than M bits to the layer 3.

The layer 3 executes computing processing using the fixed-point number data pieces at L more significant bits in the data pieces output from the layer 2, weight data pieces, and so on, and outputs output data pieces having a bit width larger than L bits to the layer 4. The layer 4 executes computing processing using the fixed-point number data pieces at K more significant bits in the data pieces output from the layer 3, weight data pieces, and so on, and outputs a computation result as an inference result.

For example, when N is "4", an arithmetic processing device including a 16-bit arithmetic logic unit is able to execute parallel computing on four data pieces. In addition, the arithmetic processing device is able to execute parallel computing on five data pieces when M is "3" and is able to execute parallel computing on three data pieces when L is "5".

Note that N bits, M bits, L bits, and K bits are average bit widths for the respective layers obtained by using a huge number of sample data pieces as described with reference to FIG. 13, and do not depend on the features of actual data pieces on which the inference processing is to be executed. Therefore, if the bit widths of data pieces for the respective layers are fixed to N bits, M bits, L bits, and K bits, the recognition precision of the inference processing may deteriorate as described with reference to FIG. 7.

Thus, according to the embodiment described with reference to FIGs. 4 to 12, it is possible to obtain substantially the same effects as those obtained in the embodiment described with reference to FIGs. 1 to 3. Further, in the embodiment illustrated in FIGs. 4 to 12, when the second bit position having the second highest frequency is present at a place less significant than the most-frequent bit position, the second bit position is determined as the most-frequent bit position and therefore as the rounding target bit, thereby suppressing deterioration in the recognition precision. This enables a reduction in the number of bits in data pieces to be used for computing by the integer arithmetic logic units 38 and 48 without deteriorating the recognition precision. This also results in an increase in the number of data pieces in parallel processes to be executed by the integer arithmetic logic units 38 and 48, and accordingly improvement in the computational efficiency of the arithmetic processing device 102.

The rounding processing causes the information in the least significant bit to be included in the bits more significant than the least significant bit. This enables a reduction in the number of bits in each data piece to be output to the integer arithmetic logic unit 38, and accordingly an increase in the number of data pieces to be output to the integer arithmetic logic unit 38. This also results in an increase in the number of parallel processes to be executed by the integer arithmetic logic units 38, and accordingly improvement in the computational efficiency.

In any of the above aspects, the various features may be implemented in hardware or as software modules running on one or more processors.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an internet website, or it could be in any other form.

The above detailed description has clarified the features and advantages of the embodiments. The description intends that the claims cover the aforementioned features and advantages of the embodiments without departing from the spirit and scope of rights. In addition, an ordinary skilled person in the art in the technical field may easily conceive any improvements or modifications. Therefore, the description does not intend to limit the scope of embodiments having inventiveness to the aforementioned embodiments, and it is also possible to rely on appropriate modifications and equivalents included in the scope disclosed in the embodiments.

## Claims

1. An arithmetic processing device comprising:
a register that stores therein a plurality of fixed-point number data pieces;
an arithmetic circuit that executes computing on the plurality of fixed-point number data pieces according to an arithmetic instruction;
an acquiring circuit that compiles statistical information on a distribution of most significant bit positions in the plurality of fixed-point number data pieces stored in the register; and
a determination circuit that identifies a most-frequent bit position which is a position having the largest number of most significant bits based on the statistical information, and determines a bit width for fixed-point number data pieces to be used for computing based on the identified most-frequent bit position, wherein
the arithmetic circuit executes computing using bits corresponding to the bit width determined by the determination circuit among bits in each fixed-point number data piece output from the register.

2. The arithmetic processing device according to claim 1, wherein
when a second bit position which is a position having the second largest number of most significant bits is located at a place less significant than the most-frequent bit position, the determination circuit determines the bit width by using the second bit position as the most-frequent bit position.

3. The arithmetic processing device according to claim 2, wherein
the determination circuit determines the bit width by using the second bit position as the most-frequent bit position when the second bit position is located at the place less significant than the most-frequent bit position by 1 bit.

4. The arithmetic processing device according to any one of claims 1 to 3, wherein
the determination circuit determines, as the bit width, a bit width from the most significant bit of the greatest value in the plurality of fixed-point number data pieces used to compile the statistical information to the most-frequent bit position, and
the arithmetic circuit executes computing using each of the plurality of fixed-point number data pieces in which a value at the most-frequent bit position is rounded.

5. The arithmetic processing device according to any one of claims 1 to 4, further comprising
a data converter that compresses a certain number of fixed-point number data pieces output from the register based on the bit width such that a total number of bits in the compressed fixed-point number data pieces is equal to or less than a number of input bits of the arithmetic circuit, wherein
the arithmetic circuit executes parallel computing on the certain number of data pieces compressed by the data converter.

6. The arithmetic processing device according to any one of claims 1 to 5, wherein
the acquiring circuit compiles the statistical information for each of groups including a certain number of fixed-point number data pieces,
the determination circuit determines the bit width for each of the groups based on the statistical information, and
the arithmetic circuit uses bits corresponding to the bit width determined for one of the groups to execute computing on a next group.

7. The arithmetic processing device according to any one of claims 1 to 6, comprising:
a plurality of the arithmetic circuits; and
a plurality of the acquiring circuits and a plurality of the determination circuits associated with the respective arithmetic circuits, wherein
the acquiring circuit and the determination circuit are provided for each of the arithmetic circuits.

8. The arithmetic processing device according to any one of claims 1 to 6, comprising:
a plurality of the arithmetic circuits, wherein
the acquiring circuit and the determination circuit are shared by the plurality of arithmetic circuits.

9. An information processing apparatus that executes inference processing by a neural network, comprising:
an arithmetic processing device; and
a controller that controls the arithmetic processing device, wherein
the arithmetic processing device includes:
a register that stores therein a plurality of fixed-point number data pieces;
an arithmetic circuit that executes computing on the plurality of fixed-point number data pieces according to an arithmetic instruction;
an acquiring circuit that compiles statistical information on a distribution of most significant bit positions in the plurality of fixed-point number data pieces stored in the register; and
a determination circuit that identifies a most-frequent bit position which is a position having the largest number of most significant bits based on the statistical information, and determines a bit width for fixed-point number data pieces to be used for computing based on the identified most-frequent bit position, wherein
the arithmetic circuit executes computing using bits corresponding to the bit width determined by the determination circuit among bits in each fixed-point number data piece output from the register.

10. An arithmetic processing method for an arithmetic processing device including a register that stores therein a plurality of fixed-point number data pieces and an arithmetic circuit that executes computing on the plurality of fixed-point number data pieces according to an arithmetic instruction, the method comprising:
causing an acquiring circuit included in the arithmetic processing device to compile statistical information on a distribution of most significant bit positions in the plurality of fixed-point number data pieces stored in the register; and
causing a determination circuit included in the arithmetic processing device to identify a most-frequent bit position which is a position having the largest number of most significant bits based on the statistical information and determine a bit width for fixed-point number data pieces to be used for computing based on the identified most-frequent bit position; and
causing the arithmetic circuit to execute computing using bits corresponding to the bit width determined by the determination circuit among the bits in each fixed-point number data piece output from the register.
